# EUROPÄISCHE PATENTSCHRIFT

(11) **EP 4 446 611 B1**
(45) Veröffentlichungstag und Bekanntmachung des Hinweises auf die Patenterteilung: **20.08.2025**
(21) Anmeldenummer: 24164653.8
(22) Anmeldetag: 19.03.2024
(51) Int. Cl.: F16F 15/167

(54) **DREHSCHWINGUNGSDÄMPFER**
TORSIONAL VIBRATION DAMPER
AMORTISSEUR DE VIBRATIONS TORSIONNELLES

(30) Priorität: 11.04.2023 DE 102023109103
(43) Veröffentlichungstag der Anmeldung: 16.10.2024
(73) Patentinhaber: Hasse & Wrede GmbH, 12681 Berlin (DE)
(72) Erfinder: STEIDL, Michael, 10318 Berlin (DE); BOHMEYER, Stephan, 15366 Hoppegarten (DE); REINSPERGER, Norbert, 15366 Hoppegarten (DE); WILLEKE, Sebastian, 15366 Hoppegarten (DE)
(74) Vertreter: Kleine, Hubertus

(56) Entgegenhaltungen:
- CN-A- 101 135 353
- DE-A1- 102020 118 066

## Beschreibung

Die vorliegende Erfindung betrifft einen Drehschwingungsdämpfer nach dem Oberbegriff des Anspruchs 1.

Ein gattungsgemäßer Drehschwingungsdämpfer ist aus der DE 10 2020 118 066 A1 bekannt.

Zum technologischen Hintergrund wird ferner die GB 11 05 292 A und die WO2018/019729 A1 genannt.

Die gattungsgemäßen Drehschwingungsdämpfer weisen einen nach außen versetztem Schwungring auf, was ihre Bauart von Konstruktionen unterscheidet, bei welchen der Schwungring komplett in einem separaten Gehäuse gekapselt gelagert ist.

Die DE 10 2020 118 066 A1 weist sodann Drehschwingungsdämpfer mit einem auf einer Antriebswelle eines Motors befestigbaren Nabenteil und einem das Nabenteil im radial äußeren Bereich umfassenden Schwungring auf. Zwischen dem Nabenteil und dem Schwungring ist ein mit einem Fluid gefüllter Spalt und zumindest eine Dichtungseinrichtung angeordnet, mittels welcher das Austreten des Fluids vermieden werden soll.

Die Dichtungseinrichtungen weisen jeweils einen ersten, mit dem Nabenteil dicht verbundenen Ring, nachfolgend als Innenring bezeichnet, sowie jeweils einen mit dem Schwungring dicht verbundenen zweiten Ring, nachfolgend als Außenring bezeichnet, auf. Weiter weist die Dichtungseinrichtung jeweils ein Dichtungselement aus einem Elastomer auf, welches jeweils einerseits abdichtend mit dem Innenring und jeweils andererseits mit dem Außenring verbunden ist.

Die DE 10 2020 118 066 A1 löst mit dieser Anordnung die Aufgabe einen Drehschwingungsdämpfer vorteilhaft dahingehend weiterzuentwickeln, so dass der innen zwischen den Ringen liegende Raum nicht durch die Dichtungselemente beeinträchtigt bzw. verringert. So ergibt sich ein weiterer Vorteil, größere Trägheitsmomente des Schwungrings zu erzielen. Zudem ist es nicht erforderlich, den Schwungring im Bereich des Dichtelementes mit Ausnehmungen zu versehen. Das Dichtelement wird dabei auf unterschiedlichen Höhen verschweißt.

Allerdings ist das Dichtungselement der DE 10 2020 118 066 A1 auf unterschiedlichen Höhen zu verschweißen. Dies erfolgt durch ein Andrücken. Dabei ist das System des Drehschwingungsdämpfers statisch überbestimmt, so dass das Verschweißen des Innenrings mit der Nabe und des Außenrings mit dem Schwungring jeweils unabhängig voneinander erfolgen muss.

Die vorliegende Erfindung setzt daher bei der Aufgabe an eine Drehschwingungsdämpfer mit vergleichbarem Aufbau zur DE 10 2020 118 066 A1 zu schaffen, welcher zugleich einfacher, insbesondere mit einfachen Schweißvorrichtungen und vorzugsweise in einem Fertigungsschritt herstellbar ist.

Die Erfindung löst diese Aufgabe durch das Bereitstellen eines Drehschwingungsdämpfers mit den Merkmalen des Anspruchs 1.

Ein erfindungsgemäßer Drehschwingungsdämpfer weist ein auf einer Antriebswelle eines Motors befestigbaren Nabenteil als Primärmasse und ein das Nabenteil im radial äußeren Bereich umfassenden Schwungring als Sekundärmasse auf.

Zwischen dem Nabenteil und dem Schwungring ist ein mit einem Fluid gefüllter Spalt. Damit das Fluid nicht entweicht, ist bzw. sind überdies eine oder mehrere Dichtungseinrichtungen vorgesehen.

Die Dichtungseinrichtung(en) weisen jeweils einen ersten, mit dem Nabenteil dicht verbundenen Ring sowie jeweils einen mit dem Schwungring dicht verbundenen zweiten Ring auf.

Weiter weist die Dichtungseinrichtung(en) jeweils ein Dichtungselement aus einem Kunststoff, vorzugsweise aus Gummi, besonders bevorzugt aus einem Elastomer oder einem TPE, auf, welches jeweils einerseits abdichtend mit dem ersten Ring und jeweils andererseits mit dem zweiten Ring verbunden ist.

Dabei ist das jeweilige Dichtungselement mit Befestigungsabschnitten an einer jeweiligen außen liegenden Axialseite des ersten und zweiten Rings materialschlüssig verbunden.

Der erste und der zweite Ring der Dichtungseinrichtung sind ihrerseits materialschlüssig mit dem Nabenteil und dem Schwungring verbunden.

Um einen breitflächigen Materialschluss zu gewährleisten, müssen die Ringe der Dichtungseinrichtung beim Verbinden an die Metalloberfläche angedrückt werden. Allerdings sind die Auflageflächen zum Andrücken toleranzbehaftet und somit höhenvariabel, so dass die Anpresskraft ungleichmäßig einwirken kann. Um dies auszugleichen weist das Dichtungselement im Bereich jedes der Befestigungsabschnitte zumindest einen elastisch-verformbaren Axialvorsprung auf.

Dadurch werden die undefinierte Höhendifferenz der Befestigungsbereiche und die damit verbundenen Fertigungstoleranzen beim Verbinden der Dichtungseinrichtung mit den weiteren Elementen des Dämpfers, insbesondere dem Schwungring und dem Nabenteil, ausgeglichen.

Vorteilhafte Ausgestaltungen der Erfindung sind Gegenstand der Unteransprüche.

Der Axialvorsprung kann als ringförmig umlaufende Materialwulst ausgebildet sein. Dies ermöglicht eine besonders gute Kraftverteilung beim Anpressen. Alternativ können zu Erhöhung der Elastizität in jedem der Befestigungsabschnitte eine Mehrzahl von auf einer Kreisbahn angeordneten Axialvorsprünge angeordnet sein.

Der oder die Axialvorsprünge können einen rechteckigen Querschnitt mit abgerundeten Kanten aufweisen, um damit besonders breitflächige Lagerflächen für eine Andrückvorrichtung bereitzustellen.

Das Dichtungselement kann zum optimalen Höhenausgleich im Bereich der Axialvorsprünge eine mindestens um 50% erhöhte Wandstärke im Vergleich zu den unmittelbar benachbarten Bereichen aufweisen. Besonders bevorzugt kann das Dichtungselement im Bereich der Axialvorsprünge eine Wandstärke aufweisen, die um 70-150% im Vergleich zu den unmittelbar benachbarten Bereichen erhöht ist.

Das Dichtungselement mit den Axialvorsprüngen kann einteilig, vorzugsweise monolithisch, insbesondere nahtfrei, also frei von Verbindungsnähten, wie sie beim Schweißen oder Kleben auftreten, ausgebildet sein. Insbesondere bei Schrägkräften ist damit eine gleichmäßige Kraftverteilung gewährleistet.

Das Dichtungselement kann vorteilhaft aus einem Elastomer oder aus TPE, einem thermoplastischen Elastomer, gefertigt sein. Diese sind besonders stabil gegenüber der Flüssigkeit im Ringspalt, welche zumeist ein anorganisches Öl ist. Vorzugsweise besteht das Dichtungselement aus einem hochtemperaturfähigen Elastomer, z.B. einem Silikonmaterial, oder aus einem hochtemperaturfähigen TPE. Die Hochtemperaturfähigkeit bezieht sich auf eine Formstabilität des Dichtungselements bei Temperaturen von mehr als 130°C, vorzugsweise mehr als 220°C. Während sich z.B. Thermoplasten, je nach Beschaffenheit schon ab 80°C plastisch verformen können, bleiben die erfindungsgemäße verwendeten Elastomere oder das erfindungsgemäß verwendete TPE formstabil und somit elastisch verformbar unter den vorgenannten Anwendungsbedingungen.

Der oder die aus Kunststoff bestehenden Dichtungselemente der Dichtungseinrichtung können mit den am Nabenteil oder am Schwungring befestigten Ringen aus Metall durch eine während eines Elastomervernetzungsvorganges hergestellte Gummi-Metallverbindung abdichtend verbunden sein. Dieser Elastomervernetzungsvorgang umfasst auch ein Anvulkanisieren.

Der oder die Dichtungseinrichtungen sind über die Ringe aus Metall mit dem Nabenteil und dem Schwungring verbunden, insbesondere verschweißt. Das Dichtungselement ist materialschlüssig mit den Ringen verbunden, insbesondere anvulkanisiert.

Die Schweißverbindung weist vorzugsweise zumindest eine ringförmig-ausgebildete Schweißnaht auf, welche insbesondere coaxial zum Schwungring und zum Nabenteil verläuft.

Das Dichtungselement kann insbesondere aus einem anorganisch gefüllten Silikonelastomer bestehen. Dieses Material hat sich für die Abdichtung von anorganischen Ölen als besonders ideal erwiesen.

Jeder der Axialvorsprünge kann jeweils eine Lagerflächen zur Auflage einer Andrückvorrichtung aufweisen, welche Lagerflächen axial versetzt, bzw. höhenversetzt, und parallel zueinander ausgebildet sind.

Weiterhin erfindungsgemäß ist ein Verfahren zur Herstellung eines vorbeschriebenen Drehschwingungsdämpfers, wobei die jeweilige Dichtungsvorrichtung über den ersten und zweiten Ring mit dem Nabenteil und dem

Schwungring des Dämpfungsschwingers mit den folgenden Verfahrensschritten materialschlüssig verbunden wird:
a) Andrücken der Dichtungseinrichtung, wobei die Metalloberfläche des ersten und/oder des zweiten Ringes mittels einer Andrückvorrichtung an das Nabenteil und den Schwungring;
b) Materialschlüssige Verbindung zwischen den Ringen der Dichtungsvorrichtung und dem Nabenteil und dem Schwungring durch Schweißen, vorzugsweise durch Elektronenstrahlschweißen, besonders bevorzugt unter Vakuum.

Weitere Merkmale und Vorteile der Erfindung ergeben sich aus weiteren Unteransprüchen und der nachfolgenden Beschreibung zweier Ausführungsbeispiele der Erfindung. Es zeigen:
- Fig. 1: eine schematische Teilschnittdarstellung eines erfindungsgemäßen Drehschwingungsdämpfers;
- Fig. 2: eine schematische Vorderansicht eines Deckels des erfindungsgemäßen Drehschwingungsdämpfers nach Fig. 1;
- Fig. 3: eine schematische Schnittansicht des Deckels nach Fig. 2; und
- Fig. 4: eine schematische Teilschnittdarstellung eines Drehschwingungsdämpfers nach dem Stand der Technik;

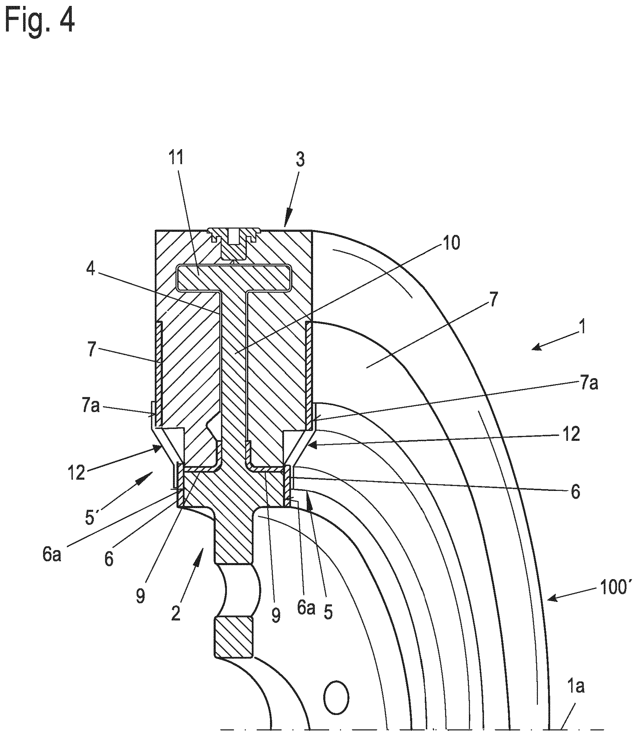

Fig. 4 zeigt einen Drehschwingungsdämpfer 1 aus dem Stand der Technik, den das Dokument DE 10 2020 118 066 A1, auf welches hier verwiesen wird, ausführlich mit Aufbau und Funktion des Drehschwingungsdämpfers beschreibt.

Der Drehschwingungsdämpfer mit einer Drehachse 1a umfasst ein auf einer Antriebswelle eines Motors befestigbares Nabenteil 2 (Primärmasse), einen das Nabenteil 2 im radial äußeren Bereich umfassenden Schwungring 3 (Sekundärmasse), wobei zwischen dem Nabenteil 2 und dem Schwungring 3 ein Spalt 4 vorgesehen ist, welcher mit einem Fluid, vorzugsweise einem Silikonöl, gefüllt ist, und Dichtungseinrichtungen 5' zur Abdichtung des Spaltes 4 nach außen. Es handelt sich dabei um einen außenliegenden Schwungring 3.

Jede Dichtungseinrichtung 5' weist jeweils einen ersten, mit dem Nabenteil 2 dicht verbundenen Ring 6 sowie einem mit dem Schwungring 3 ebenfalls dicht verbundenen zweiten Ring 7 sowie ein Dichtelement 12 aus einem Elastomer oder einem TPE auf, welches einerseits abdichtend mit dem ersten Ring 6 und andererseits abdichtend mit dem zweiten Ring 7 verbunden ist.

Die Ringe 6, 7 bestehen vorzugsweise aus Metall und sind mit dem Nabenteil 2 bzw. dem Schwungring 3 durch ein geeignetes Verbindungsverfahren, insbesondere Schrauben, Schweißen, Kleben, Löten oder dergleichen fest und dicht verbunden.

Der jeweilige, aus Elastomer oder TPE, vorzugsweise aus hochtemperaturfähigem Elastomer, z.B. Silikonmaterial, oder hochtemperaturfähigem TPE hergestellte Dichtelement 12 ist mit den beiden ersten und zweiten Ringen 6, 7 nach Art eines Verbundteils umlaufend abdichtend verbunden. Diese Verbindung ist durch eine insbesondere während eines Elastomervernetzungsvorganges hergestellte Gummi-Metallverbindung realisierbar. Alternativ oder zusätzlich kann ein Schweißvorgang erfolgen.

Der Ring 6, Ring 7 und das Dichtungselement 12 bilden eine Baugruppe als Dichtungseinrichtung, die auch als Deckel 100' bezeichnet wird. Der Drehschwingungsdämpfer 1 weist zwei Deckel 100' auf.

Der Schwungring 3 ist hier gegenüber dem Nabenteil 2 auf Gleitlagern 9 gelagert, und zwar sowohl radial wie auch axial, wodurch die Größe des Spaltes 4 genau definiert ist.

Der Schwungring 3 besteht aus vorzugsweise zwei Bauteilen, um diesen Schwungring 3 auf dem Nabenteil 2 montieren zu können. Hierbei sind alle bisher bekannten Konstruktionsformen sowie weitere denkbar.

Das Nabenteil 2 ist in den dargestellten Ausführungsbeispielen mit einem radial nach außen vorstehenden Flansch 10 versehen, der im äußeren Randbereich abgeschlossen wird durch einen in Axialrichtung verlaufenden Steg 11, der sich zu beiden Seiten des Flansches 10 hin erstrecken kann, wodurch sich eine T-Form ergibt, aber auch lediglich zu einer Seite des Flansches 10 hin gesehen verlaufen kann, so dass sich ein L-förmiger Querschnitt ergibt. Durch diese Geometrie ist der Schwungring 3 sowohl in Radialrichtung wie auch in Axialrichtung gegenüber dem Nabenteil 2 fixiert, wobei, wie schon erwähnt, durch die Gleitlager 9 die Größe des umlaufenden Spaltes 4 stets definiert ist.

Das aus Elastomer oder TPE hergestellte ringförmige Dichtungselement 12 ist an größerflächigen, außen liegenden axialen und radialen Kantenbereichen 6a, 7a der Ringe 6 und 7 gleichzeitig anvulkanisiert. Die Kantenbereiche 6a, 7a sind somit Befestigungsflächen für das Dichtungselement 12. Dies wird unten noch weiter beschrieben.

Jede Dichtungseinrichtung 5' besteht hierbei auch jeweils aus dem ersten, mit dem Nabenteil 2 dicht verbundenen Ring 6, dem mit dem Schwungring 3 ebenfalls dicht verbundenen zweiten Ring 7 sowie dem ringförmigen Dichtungselement 12 aus einem Elastomer oder TEP, welches einerseits abdichtend mit dem ersten Ring 6 und andererseits abdichtend mit dem zweiten Ring 7 verbunden ist.

Dabei überlappen sich der erste Ring 6 und der zweite Ring 7 einer jeweiligen Dichtungseinrichtung 5' in radialer Richtung nicht. Dabei ist der Außendurchmesser des ersten Rings 6 kleiner als der Innendurchmesser des zweiten Rings 7.

Die jeweils ersten und zweiten Ringe 6, 7 der jeweiligen Dichtungseinrichtung 5' sind hier in axial voneinander beabstandeten Ebenen angeordnet.

Hierdurch ergibt sich eine einwandfreie und dauerhafte Abdichtung des Spaltbereiches, wobei bei der Verwendung von hochtemperaturfähigen Elastomeren, z.B. Silikonmaterial oder entsprechenden TPE-Materialien für die jeweiligen ringförmigen Dichtungselemente 12 der Vorteil gegeben ist, dass diese auch in hohen Temperaturbereichen geeignet sind.

Es ist besonders vorteilhaft, dass das aus einem Elastomer, bevorzugt aus Silikon, oder aus einem TPE hergestellte ringförmige Dichtungselement 12 an den Kantenbereichen 6a, 7a der einander gestaffelt angeordneten außen liegenden axialen Flächen und aneinander gegenüberliegenden radialen Flächen der ersten und zweiten Ringe 6, 7 anvulkanisiert ist. Dies wird unten noch weiter beschrieben.

Unter dem Begriff "gestaffelt" ist zu verstehen, dass diese außen liegenden axialen Flächen bzw. deren Kantenbereiche 6a, 7a in radialer Richtung übereinander angeordnet sind und beide in die gleiche Richtung, nämlich nach außen, weisen, wobei ein Innendurchmesser des Kantenbereiches 7a des zweiten Rings 7 größer ist als ein Außendurchmesser des ersten Rings 6.

Der Schwungring 3 ist auch hier vorteilhafterweise gegenüber dem Nabenteil 2 auf Gleitlagern 9 gelagert, und zwar sowohl radial wie auch axial, wodurch die Größe des Spaltes 4 genau definiert ist.

Auf diese Weise sind Deckel 100' des erfindungsgemäßen Drehschwingungsdämpfers 1 gebildet, welche jeweils den ersten Ring 6, den zweiten Ring 7 und das Dichtungselement 12 aufweisen.

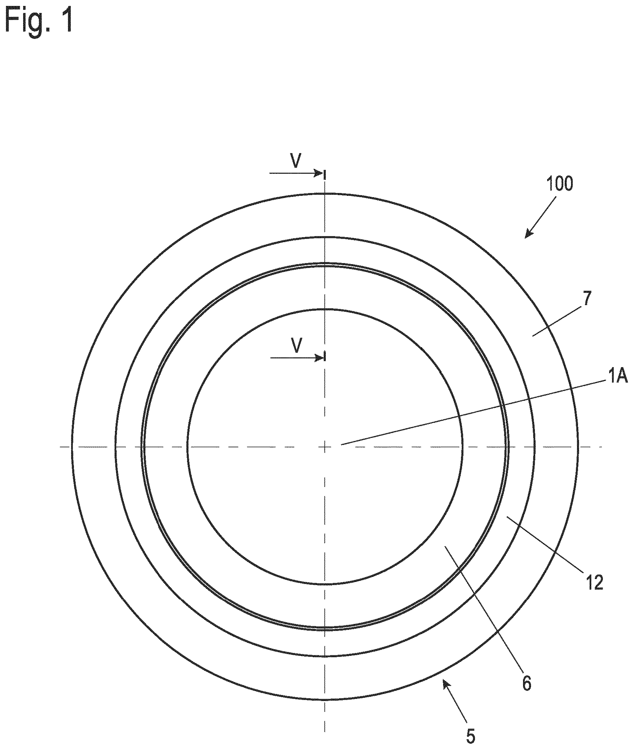

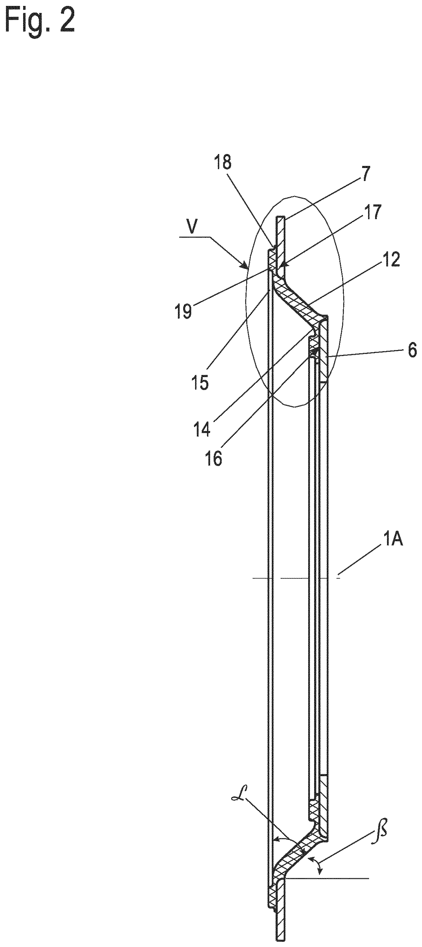

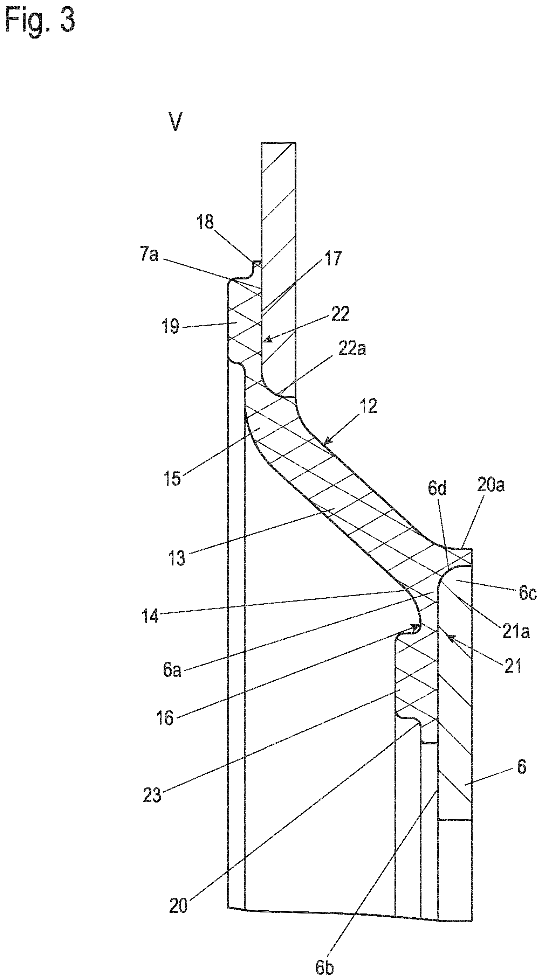

Fig. 1 zeigt dazu eine schematische Vorderansicht eines Deckels 100 eines erfindungsgemäßen Drehschwingungsdämpfers 1. In Fig. 2 ist eine schematische Schnittansicht des Deckels 100 nach Fig. 1 dargestellt. Eine vergrößerte Darstellung des Bereiches V-V des Deckels 100 nach Fig. 1 und des Bereiches V in Fig. 2 zeigt Fig. 3.

Baugleiche Elemente zu Fig.4 werden mit identischen Bezugszeichen versehen.

Ein Rand des Außendurchmessers des ersten Rings 6 ist in einem radialen Abstand und in einem axialen Abstand zu einem Rand des Innendurchmessers des zweiten Rings 7 angeordnet.

Ein Dichtungsabschnitt 13 des jeweiligen ringförmigen Dichtungselementes 12 verläuft dabei insgesamt schräg zur radialen und zur axialen Richtung und haftet jeweils sowohl an den außen liegenden Axialseiten und den Radialseiten der jeweiligen Ringe 6, 7.

Unter dem Begriff "schräg zur radialen Richtung und zur axialen Richtung" ist zu verstehen, dass der Dichtungsabschnitt 13 unter einem Winkel α zu der radialen Richtung, die senkrecht auf der axialen Richtung der Drehachse 1a steht, und unter einem Winkel β zu der axialen Richtung der Drehachse 1a verläuft.

Die außen liegenden Axialseiten der jeweiligen Ringe 6, 7 weisen dabei die Kantenbereiche 6a und 7a auf.

Der Begriff "außen liegende Axialseiten" bedeutet die jeweiligen Seiten bzw. Seitenflächen der Ringe 6, 7 beider Dichtungseinrichtungen 5, welche nach außen weisen, somit vom Schwungring 3 abgewandt sind und im Gegensatz zu innenliegenden Seiten weder mit dem Schwungring 3 noch mit dem Nabenteil 2 verbunden sind.

Unter dem Begriff "Radialseiten" sind die jeweiligen umlaufenden radialen Mantelflächen mit dem zugehörigen Durchmesser des jeweiligen Rings 6, 7. Die Ringe 6, 7 bilden jeweils eine zylindrische Ringscheibe mit kreisförmigem Querschnitt mit einem Außen- und einem Innendurchmesser.

Dabei ist vorteilhaft vorgesehen, dass die beiden Ringe 6, 7, also die beiden Metallringe der Dichtungseinrichtungen 5, unterschiedliche Durchmesser (innen und außen) aufweisen und dass das als Kunststoffring ausgebildete Dichtungselement 12 nach Art einer Kunststoffspur axial unter dem Winkel β verläuft, dessen Wert zwischen 15 und 50° liegt. Der zugehörige Winkel α zur radialen Richtung weist dann den Wert α = 90°- β auf.

Dies führt zu einer sehr guten Dauerhaltbarkeit des Dichtungselementes 12 bei starker mechanischer Beanspruchung. Der Einfluss des Materials des Dichtungselementes 12 auf die Lebensdauer des Silikonöls in dem Spalt 4 ist gering. Zudem ist die Beständigkeit des Materials des Dichtungselementes 12 gegenüber dem Silikonöl über die Dämpferlebensdauer ebenfalls nur gering (geringe Quellung).

Das Dichtungselement 12 umfasst den umlaufenden Dichtungsabschnitt 13 mit Übergangsabschnitten 14, 15 und Befestigungsabschnitten 16, 17. Dies ist am besten in der vergrößerten Darstellung in Fig. 3 zu erkennen.

Der Dichtungsabschnitt 13 ist an seinem unteren Ende durch den konkaven (in Bezug auf die Außenseite) Übergangsabschnitt 14 mit dem ersten Befestigungsabschnitt 16 verbunden. Der Befestigungsabschnitt 16 weist von dem zweiten Ring 7 abgewandt eine umlaufende Ausnehmung 21 auf, welche axial durch einen sich in radialer Richtung erstreckenden umlaufenden Überstand 20 und radial durch einen weiteren, sich in axialer Richtung erstreckenden umlaufenden Überstand 20a begrenzt ist.

Das Dichtungselement 12 ist mit dem ersten Befestigungsabschnitt 16 derart an der Axialseite und der Radialseite des Außendurchmessers des ersten Rings 6 anvulkanisiert, dass die Ausnehmung 21 den Außenrand des ersten Rings 6 umgibt. Dabei ist der Befestigungsabschnitt 17 mit dem radialen Überstand 20 mit dem Kantenbereich 6a des ersten Rings 6 und der axiale Überstand 20a mit der Mantelfläche 6d des Außendurchmessers des ersten Rings 6 verbunden.

Eine Rundung 6c der Kante zwischen Kantenbereich 6a und Mantelfläche 6d des ersten Rings 6 ist von einem damit korrespondierenden Abschnitt in Art einer Hohlkehle 21a der Ausnehmung 21 des Dichtungselementes 12 dicht umgeben.

In ähnlicher Weise ist der Dichtungsabschnitt 13 an seinem oberen Ende durch den konvexen Übergangsabschnitt 15 mit dem zweiten Befestigungsabschnitt 17 verbunden. Der Befestigungsabschnitt 17 weist dem zweiten Ring 7 zugewandt eine Ausnehmung 22 auf, welche axial durch einen sich in radialer Richtung erstreckenden Überstand 18 und radial durch eine umlaufende Hohlkehle 22a begrenzt ist.

Das Dichtungselement 12 ist mit dem zweiten Befestigungsabschnitt 17 derart an der Axialseite und der Radialseite des Innendurchmessers des zweiten Rings 7 anvulkanisiert, dass die Ausnehmung 22 den Innenrand des zweiten Rings 7 umgibt. Dabei ist der Befestigungsabschnitt 17 mit dem radialen Überstand 18 mit dem Kantenbereich 7a des zweiten Rings 7 und der Hohlkehle 22a mit der Mantelfläche 7d des Innendurchmessers des zweiten Rings 7 verbunden. Eine Rundung 7b der Kante zwischen Kantenbereich 7a und Mantelfläche 7d des zweiten Rings 7 ist von der damit korrespondierenden Hohlkehle 22a der Ausnehmung 22a des Dichtungselementes 12 dicht umgeben.

Der Befestigungsabschnitt 17 weist hier einen axialen Vorsprung auf, welcher von dem Befestigungsabschnitt 17 nach außen hervorsteht. Dieser Vorsprung wird hier als Axialvorsprung 19 bezeichnet und ist im Querschnitt rechteckig mit abgerundeten Kanten. Dieser integrierte Axialvorsprung 19 verhindert einerseits eine Beschädigung des Dichtungselementes 12 während des Baus des Drehschwingungsdämpfers 1, des Transports und der Montage. Andererseits dient die Form- und Toleranzausgleich für eine Andrückvorrichtung, welche beim Befestigen eingesetzt wird um eine optimale Kontaktierung an der Schnittstelle zwischen den beiden Metalloberflächen des jeweiligen Rings der Dämpfungseinrichtung mit dem Schwungring oder dem Nabenteil, insbesondere durch Schweißen, zu erreichen.

Das Befestigen des Dichtelements 12 mit dem jeweiligen Ring 6 oder 7 kann durch Anvulkanisieren erfolgen.

Die Anformung und Gestaltung des sich nach axial - bezogen auf die Drehachse 1a - nach außen erstreckenden Axialvorsprungs 19 ist besonders einfach als ringförmig umlaufende Wulst ausgebildet. Da der Axialvorsprung 19 beim Verschweißen der Metalloberflächen auf Druck durch eine Andrückvorrichtung allerdings elastisch-verformbar ausgebildet sein soll, so kann es sich bei dem Axialvorsprung vorzugsweise auch um mehrere umfangsverteilt auf einer Kreisbahn angeordnete Vorsprünge, z.B. Punktvorsprünge, handeln.

Im Unterschied zum Stand der Technik weist das Dichtelement im Bereich des Befestigungsabschnitts 16, an welchem der erste Ring 6 mit dem Dichtungselement 12 verbunden ist ebenfalls einen Axialvorsprung 23 auf. Dieser die Axialvorsprünge 19 und 23 sind in axialer Richtung auf unterschiedlichen Ebenen angeordnet.

Wie aus Fig. 1-4 erkennbar wird das Dichtungselement 12 auf unterschiedlichen Höhen geschweißt, wobei der Innenring eine andere Höhe als der Außenring aufweist. Zum Schweißen ist ein Andrücken der Dichtringe erforderlich. Das Gesamtsystem ist statisch überbestimmt. So führen lange Toleranzketten dazu, dass zwischen Soll-Lage Innen zu Soll-Lage außen recht große Abweichungen bei der Ist-Lage auftreten können. Deshalb ist es vorteilhaft die Vorrichtung so zu konzipieren, dass sie Innen- und Außenring unabhängig voneinander und kraftgesteuert andrückt. Durch die Erfindung wird der Höhenunterschied durch die elastisch-verformbaren Axialvorsprünge in beiden Befestigungsbereichen 16 und 17 der Ringe ausgeglichen, sodass eine günstige, starre und weggesteuerte und/oder kraftgesteuerte Andrückvorrichtung in der Fertigung verwendet werden kann.

Insbesondere kann in beiden Befestigungsbereichen 16 und 17 beim Vulkanisieren zusätzlich ein elastischer Wulst in axialer Richtung aufgebracht werden. Dieser kann durch die Andrückvorrichtung zusammengedrückt, so dass die Form- und durch Lagetoleranzen ausgeglichen werden.

Anschließend kann ein Verschweißen der Ringe mit den weiteren Bauteilen des Drehschwingungsdämpfers erfolgen. Besonders bevorzugt weist das Dichtungselement 12 im Bereich der Axialvorsprünge 19 und 23 eine mindestens um 50% erhöhte Wandstärke im Vergleich zu den unmittelbar benachbarten Bereichen auf. Besonders bevorzugt kann die Wandstärke um 70-150% gegenüber den vorgenannten benachbarten Bereichen erhöht sein.

Zum Verschweißen der Ringe kann insbesondere eine einstückige Andrückvorrichtung verwendet werden, die beim Andrückvorgang weggesteuert werden kann, da alle Toleranzen durch die erfindungsgemäßen Axialvorsprünge aus einem elastischen Material, wie Gummi, ausgeglichen werden können. Ohne die Ringe und die Axialvorsprünge würde man eine zweistückige Andrückvorrichtung benötigen, wobei der innere und der äußere Ring kraftgesteuert angedrückt werden müssten, was in der Fertigung komplizierter, teurer und je nach Übersetzung auch zeitaufwendiger ist.

Daher ist die Kombination der Axialvorsprünge und der verschweißbaren Ringe von besonderem Vorteil für die Fertigung der Dichtungseinrichtung mit dem Dichtungselement und für die Fertigung des Drehschwingers insgesamt.

Das Dichtungselement 12 mit den Axialvorsprüngen ist einteilig, insbesondere monolithisch bzw. nahtfrei ausgebildet.

Wie aus den Fig. 1-3 erkennbar weist jeder der jeder der Axialvorsprünge 19 und 23 jeweils eine Lagerflächen 24 und 25 zur Auflage einer Andrückvorrichtung aufweist, welche parallel zueinander ausgebildet sind. Dabei sind die Lagerflächen 24 und 25 zueinander höhenversetzt auf unterschiedlichen Ebenen entlang der Drehachse 1a angeordnet

Das Schweißen kann bevorzugt durch Strahlschweißen, insbesondere Elektronenstrahlschweißen, besonders bevorzugt unter Vakuum, erfolgen.

Die Erfindung ist durch das oben angegebene Ausführungsbeispiel nicht eingeschränkt, sondern im Rahmen der Ansprüche modifizierbar.

### Bezugszeichenliste

- 1, 1': Drehschwingungsdämpfer
- 1a: Drehachse
- 2: Nabenteil
- 2a: Befestigungsfläche
- 2b: Rand
- 3: Schwungring
- 3a: Innenabschnitt
- 3b: Rand
- 3c: Befestigungsfläche
- 4: Spalt
- 5: Dichtungseinrichtung
- 6: Ring
- 6a: Kantenbereich
- 6b: Befestigungsfläche
- 6c: Rundung
- 6d: Mantelfläche
- 7: Ring
- 7a: Kantenbereich
- 7b: Rundung
- 7c: Mantelfläche
- 8: Ring
- 9: Gleitlager
- 10: Flansch
- 11: Steg
- 12: Dichtungselement
- 13: Dichtungsabschnitt
- 14, 15: Übergangsabschnitt
- 16, 17: Befestigungsabschnitt
- 18: Überstand
- 19: Axialvorsprung
- 20: Überstand
- 21, 22: Ausnehmung
- 21a,22a: Hohlkehle
- 100, 100': Deckel
- 23: Axialvorsprung
- 24, 25: Lagerfläche
- α, β: Winkel

## Patentansprüche

1. Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und eine oder mehrere Dichtungseinrichtungen (5) vorgesehen sind, mittels derer das Austreten des Fluids vermieden werden soll, wobei die Dichtungseinrichtung oder die Dichtungseinrichtungen (5) jeweils einen ersten, mit dem Nabenteil (2) dicht verbundenen Ring (6) sowie jeweils einen mit dem Schwungring (3) dicht verbundenen zweiten Ring (7) sowie jeweils ein Dichtungselement (12) aus einem Kunststoff aufweisen, welches jeweils einerseits abdichtend mit dem ersten Ring (6) und jeweils andererseits mit dem zweiten Ring (7) verbunden ist,
wobei das jeweilige Dichtungselement (12) mit Befestigungsabschnitten (16, 17) an einer jeweiligen außen liegenden Axialseite des ersten und zweiten Rings (6, 7) materialschlüssig verbunden ist,
**dadurch gekennzeichnet, dass** das Dichtungselement (12) im Bereich jedes der Befestigungsabschnitte (16, 17) zumindest einen elastisch-verformbaren Axialvorsprung (19, 23) aufweist.

2. Drehschwingungsdämpfer nach Anspruch 1, **dadurch gekennzeichnet, dass** der Axialvorsprung (19, 23) als ringförmig umlaufende Materialwulst ausgebildet ist oder **dass** in jedem der Befestigungsabschnitte (16, 17) eine Mehrzahl von auf einer Kreisbahn angeordneten Axialvorsprünge angeordnet sind.

3. Drehschwingungsdämpfer nach Anspruch 1 oder 2, **dadurch gekennzeichnet, dass** der oder die Axialvorsprünge (19, 23) einen rechteckigen Querschnitt mit abgerundeten Kanten aufweist.

4. Drehschwingungsdämpfer nach einem der vorstehenden Ansprüche,
**dadurch gekennzeichnet, dass** das Dichtungselement (12) im Bereich der Axialvorsprünge (19 und 23) eine mindestens um 50% erhöhte Wandstärke im Vergleich zu den unmittelbar benachbarten Bereichen aufweist.

5. Drehschwingungsdämpfer nach einem der vorstehenden Ansprüche,
**dadurch gekennzeichnet, dass** das Dichtungselement (12) im Bereich der Axialvorsprünge (19 und 23) eine Wandstärke aufweist, die um 70-150% im Vergleich zu den unmittelbar benachbarten Bereichen erhöht ist.

6. Drehschwingungsdämpfer nach einem der vorstehenden Ansprüche,
**dadurch gekennzeichnet, dass** das Dichtungselement (12) mit den Axialvorsprüngen (19, 23) einteilig, vorzugsweise monolithisch, insbesondere nahtfrei, ausgebildet ist.

7. Drehschwingungsdämpfer nach einem der vorhergehenden Ansprüche,
**dadurch gekennzeichnet, dass** das Dichtungselement (12) aus Elastomer oder TPE gefertigt ist und vorzugsweise aus einem hochtemperaturfähigen Elastomer, z.B. einem Silikonmaterial, oder aus einem hochtemperaturfähigen TPE besteht, wobei sich die Hochtemperaturfähigkeit sich auf eine Formstabilität des Dichtungselements (12) bei Temperaturen von mehr als 130°C bezieht.

8. Drehschwingungsdämpfer nach Anspruch 7, **dadurch gekennzeichnet, dass** die Dichtungseinrichtung (5) mit den Ringen (6, 7) aus Metall durch eine Schweißverbindung am Nabenteil (2) und am Schwungring (3) befestigt sind.

9. Drehschwingungsdämpfer nach Anspruch 8, **dadurch gekennzeichnet, dass** die Schweißverbindung zumindest eine ringförmig-ausgebildete Schweißnaht aufweist.

10. Drehschwingungsdämpfer einem der vorhergehenden Ansprüche, **dadurch gekennzeichnet, dass** das Dichtungselement (12) aus einem anorganisch gefüllten Silikonelastomer besteht, wobei der Anteil des anorganischen Materials vorzugsweise mindestens 30% beträgt.

11. Drehschwingungsdämpfer nach einem der vorhergehenden Ansprüche,
**dadurch gekennzeichnet, dass** jeder der Axialvorsprünge (19, 23) jeweils eine Lagerflächen (24, 25) zur Auflage einer Andrückfläche einer Andrückvorrichtung aufweist, welche Lagerflächen (24, 25) axial versetzt und parallel zueinander ausgebildet sind.

12. Verfahren zur Herstellung eines Drehschwingungsdämpfers nach einem der vorhergehenden Ansprüche, wobei die jeweilige Dichtungseinrichtung (5) mit dem Nabenteil (2) und dem Schwungring (3) **mit den folgenden Schritten** materialschlüssig verbunden wird:
a) Andrücken der Metalloberfläche des ersten und/oder des zweiten Ringes (6, 7) der Dichtungseinrichtung (5) mittels einer Andrückvorrichtung an das Nabenteil (2) und den Schwungring (3);
b) Materialschlüssige Verbindung zwischen der Dichtungseinrichtung (5) und dem Nabenteil (2) und dem Schwungring (3) durch Schweißen, vorzugsweise durch Elektronenstrahlschweißen, besonders bevorzugt unter Vakuum.

## Claims

1. Torsional vibration damper (1) with a hub part (2) (primary mass) which can be fastened onto a drive shaft of an engine and a flywheel ring (3) (secondary mass) which surrounds the hub part (2) in the radially outer region, wherein a gap (4) filled with a fluid and one or more sealing apparatuses (5) are provided between the hub part (2) and the flywheel ring (3), by means of which sealing apparatuses the escape of the fluid is to be prevented, wherein the sealing apparatus or the sealing apparatuses (5) respectively comprise a first ring (6) sealingly connected to the hub part (2) and a second ring (7) sealingly connected to the flywheel ring (3) as well as a sealing element (12) made of a plastic, which is sealingly connected to the first ring (6) on the one hand and to the second ring (7) on the other hand, wherein the respective sealing element (12) is connected in a material-bonding manner to fastening portions (16, 17) on a respective outer axial side of the first and second ring (6, 7),
**characterized in that** the sealing element (12) has at least one elastically deformable axial projection (19, 23) in the region of each of the fastening portions (16, 17).

2. Torsional vibration damper according to claim 1, **characterized in that** the axial projection (19, 23) is configured as an annular circumferential material bead or **in that** a plurality of axial projections arranged on a circular path are arranged in each of the fastening portions (16, 17).

3. Torsional vibration damper according to claim 1 or 2, **characterized in that** the axial projection or projections (19, 23) has or have a rectangular cross-section with rounded edges.

4. Torsional vibration damper according to any one of the preceding claims, **characterized in that** the sealing element (12) has a wall thickness in the region of the axial projections (19 and 23) that is increased by at least 50% compared to the immediately adjacent regions.

5. Torsional vibration damper according to any one of the preceding claims, **characterized in that** the sealing element (12) has a wall thickness in the region of axial projections (19 and 23) which is increased by 70-150% compared to the immediately adjacent regions.

6. Torsional vibration damper according to any one of the preceding claims, **characterized in that** the sealing element (12) is formed in one piece, preferably monolithically, in particular seamlessly, with the axial projections (19, 23).

7. Torsional vibration damper according to any one of the preceding claims, **characterized in that** the sealing element (12) is made of elastomer or TPE and preferably consists of a high-temperature-resistant elastomer, e.g. a silicone material, or of a high-temperature-resistant TPE, wherein the high-temperature resistance relates to a dimensional stability of the sealing element (12) at temperatures above 130°C.

8. Torsional vibration damper according to claim 7, **characterized in that** the sealing apparatus (5) with the rings (6, 7) made of metal are attached to the hub part (2) and to the flywheel ring (3) by a welded joint.

9. Torsional vibration damper according to claim 8, **characterized in that** the welded joint has at least one annular weld seam.

10. Torsional vibration damper according to any one of the preceding claims, **characterized in that** the sealing element (12) consists of an inorganically filled silicone elastomer, wherein the proportion of inorganic material is preferably at least 30%.

11. Torsional vibration damper according to any one of the preceding claims, **characterized in that** each of the axial projections (19, 23) has a respective bearing surface (24, 25) for supporting a pressure surface of a pressure device, which bearing surfaces (24, 25) are axially offset and arranged parallel to one another.

12. Method for manufacturing a torsional vibration damper according to any one of the preceding claims, wherein the respective sealing apparatus (5) is connected to the hub part (2) and the flywheel ring (3) in a material-bonded manner **with the following steps:**
a) pressing the metal surface of the first and/or the second ring (6, 7) of the sealing apparatus (5) against the hub part (2) and the flywheel ring (3) by means of a pressing device;
b) forming a material-bonded connection between the sealing apparatus (5) and the hub part (2) and the flywheel ring (3) by welding, preferably by electron beam welding, most preferably under vacuum.

## Revendications

1. Amortisseur de vibrations de torsion (1) avec une partie de moyeu (2) (masse primaire) pouvant être fixée sur un arbre d'entraînement d'un moteur et une bague d'inertie (3) (masse secondaire) comprenant la partie de moyeu (2) dans la zone radialement extérieure, dans lequel entre la partie de moyeu (2) et la bague d'inertie (3) sont prévus une fente (4) remplie d'un fluide et un ou plusieurs appareils d'étanchéité (5), au moyen desquels la sortie du fluide doit être évitée, dans lequel le ou les appareils d'étanchéité (5) présentent respectivement une première bague (6) reliée de manière étanche à la partie de moyeu (2), ainsi que respectivement une seconde bague (7) reliée de manière étanche à la bague d'inertie (3), ainsi que respectivement un élément d'étanchéité (12) en une matière plastique qui est relié respectivement, d'une part, hermétiquement à la première bague (6) et respectivement, d'autre part, à la seconde bague (7),
dans lequel l'élément d'étanchéité (12) respectif est relié par matière à des sections de fixation (16, 17) au niveau d'un côté axial respectif situé à l'extérieur de la première et de la seconde bagues (6, 7),
**caractérisé en ce que** l'élément d'étanchéité (12) présente dans la zone de chacune des sections de fixation (16, 17) au moins une saillie (19, 23) axiale déformable élastiquement.

2. Amortisseur de vibrations de torsion selon la revendication 1, **caractérisé en ce que** la saillie axiale (19, 23) est formée comme bourrelet de matériau en anneau ou **en ce qu'**une pluralité de saillies axiales agencées sur une trajectoire circulaire est agencée dans chacune des sections de fixation (16 17).

3. Amortisseur de vibrations de torsion selon la revendication 1 ou 2,
**caractérisé en ce que** la ou les saillies axiales (19, 23) présentent une section transversale rectangulaire avec des arêtes arrondies.

4. Amortisseur de vibrations de torsion selon l'une quelconque des revendications précédentes, **caractérisé en ce que** l'élément d'étanchéité (12) présente dans la zone des saillies axiales (19 et 23) une épaisseur de paroi accrue au moins de 50 % par rapport aux zones directement contiguës.

5. Amortisseur de vibrations de torsion selon l'une quelconque des revendications précédentes, **caractérisé en ce que** l'élément d'étanchéité (12) présente dans la zone des saillies axiales (19 et 23) une épaisseur de paroi qui est accrue de 70 à 150 % par rapport aux zones directement contiguës.

6. Amortisseur de vibrations de torsion selon l'une quelconque des revendications précédentes, **caractérisé en ce que** l'élément d'étanchéité (12) est formé avec les saillies axiales (19, 23) d'un seul tenant, de préférence de manière monolithique, en particulier sans couture.

7. Amortisseur de vibrations de torsion selon l'une quelconque des revendications précédentes, **caractérisé en ce que** l'élément d'étanchéité (12) est fabriqué en élastomère ou TPE et se compose de préférence d'un élastomère résistant à des températures élevées, par exemple un matériau de silicone ou d'un TPE résistant à des températures élevées, dans lequel la résistance à des températures élevées se réfère à une stabilité de formes de l'élément d'étanchéité (12) à des températures supérieures à 130 °C.

8. Amortisseur de vibrations de torsion selon la revendication 7, **caractérisé en ce que** l'appareil d'étanchéité (5) est fixé avec les bagues (6, 7) en métal par une liaison soudée à la partie de moyeu (2) et à la bague d'inertie (3).

9. Amortisseur de vibrations de torsion selon la revendication 8, **caractérisé en ce que** la liaison soudée présente au moins un cordon de soudure formé en anneau.

10. Amortisseur de vibrations de torsion selon l'une quelconque des revendications précédentes, **caractérisé en ce que** l'élément d'étanchéité (12) se compose d'un élastomère de silicone à charge inorganique, dans lequel la proportion du matériau inorganique est de préférence d'au moins 30 %.

11. Amortisseur de vibrations de torsion selon l'une quelconque des revendications précédentes, **caractérisé en ce que** chacune des saillies axiales (19, 23) présente respectivement une surface de palier (24, 25) pour l'appui d'une surface de pression d'un dispositif de pression, lesquelles surfaces de palier (24, 25) sont formées en déport axial et parallèlement l'une à l'autre.

12. Procédé de fabrication d'un amortisseur de vibrations de torsion selon l'une quelconque des revendications précédentes, dans lequel l'appareil d'étanchéité (5) respectif est relié par matière à la partie de moyeu (2) et à la bague d'inertie (3) **avec les étapes suivantes** :
a) la pression de la surface métallique de la première et/ou de la seconde bague (6, 7) de l'appareil d'étanchéité (5) au moyen d'un dispositif de pression contre la partie de moyeu (2) et la bague d'inertie (3) ;
b) la liaison par matière entre l'appareil d'étanchéité (5) et la partie de moyeu (2) et la bague d'inertie (3) par soudage, de préférence par soudage par faisceau d'électrons, le plus préférentiellement sous vide.
